# FASCICULE DE BREVET EUROPEEN

(11) **EP 1 687 223 B1**
(45) Date de publication et mention de la délivrance du brevet: **14.05.2008**
(21) Numéro de dépôt: 04805535.4
(22) Date de dépôt: 24.11.2004
(51) Int. Cl.: B65G 69/04, B01J 8/00

(54) **APPAREIL DESTINE AU REMPLISSAGE D'UN RECIPIENT AVEC DES PARTICULES SOLIDES**
VORRICHTUNG ZUM FÜLLEN EINES BEHÄLTERS MIT FESTEN TEILCHEN
APPARATUS FOR FILLING A CONTAINER WITH SOLID PARTICLES

(30) Priorité: 25.11.2003 FR 0313771
(43) Date de publication de la demande: 09.08.2006
(73) Titulaire: Poussin, Bernard, 78420 Carrières sur Seine (FR)
(72) Inventeur: Poussin, Bernard, 78420 Carrières sur Seine (FR)
(74) Mandataire: de la Bigne, Guillaume Michel Marie
(86) Numéro de dépôt international: PCT/FR2004/003006
(87) Numéro de publication internationale: WO 2005/051814

(56) Documents cités:
- DE-A- 4 016 648
- FR-A- 1 171 460
- US-A- 3 490 619
- US-A- 4 306 829
- US-A- 4 919 303
- US-A- 5 238 035

## Description

La présente invention concerne le domaine du remplissage de récipients contenant des solides divisés tels que grains ou granulés. Ces récipients sont des réacteurs pour l'industrie pétrolière ou chimique; des silos pour le stockage des céréales ; et plus généralement toutes les capacités de stockage contenant des particules solides granuleuses.

Les récipients comme les silos ou réacteurs sont souvent remplis à partir de trémies ou entonnoirs, qui y déversent directement les grains à travers des manches ou des conduits souples ou des tuyauteries rigides.

Cette façon de faire présente des inconvénients.

En premier lieu, elle n'optimise pas la quantité de grains logée dans un récipient, car il subsiste entre les grains des vides importants et le volume n'est pas complètement utilisé. On peut ainsi avoir un déficit de 10 à 25 % par rapport au remplissage théorique.

En second lieu, il se produit une ségrégation granulométrique qui concentre les plus gros grains à l'extérieur, alors que les fines et les poussières forment une cheminée dans la partie centrale. Cela provoque une hétérogénéité du lit, nuisible en fonctionnement lorsqu' un fluide doit circuler à travers ce lit, pour produire des réactions dans le cas des catalyseurs, pour contrôler la conservation des matières, dans le cas des silos à céréales.

Enfin, la projection brutale des grains contre les parois, en début de remplissage entraîne une proportion élevée de brisures.

Parmi les modes de remplissage connus qui permettent d'éviter en partie ces inconvénients, on peut citer l'appareillage décrit dans le brevet BE 899420 qui utilise une manche fixe terminée par une partie évasée, ou bien le dispositif statique décrit dans le brevet US 3949908 et ses perfectionnements, qui souffle du gaz latéralement afin d'éparpiller les grains. Ces appareils ne permettent pas de remplir toutes les zones de la capacité et provoquent l'attrition des grains et l'émission d'une poussière abondante.

D'autres procédés qui utilisent des organes tournants, tels que ceux décrits dans les brevets FR 2258795 ou bien FR 2653092 ou US 5950694 ou encore US 5238035, qui décrit un appareil selon le préambule de la revendication 1, améliorent les résultats en terme de répartition des grains; mais il demeure certains inconvénients dus au frottement des grains sur des matériaux souples mais dont le coefficient de frottement est très élevé, ou bien au frottement des particules entre elles, au cours de leur écoulement de la trémie fixe, vers les éléments mobiles de distribution. Ces frottements provoquent un phénomène d'attrition des grains et la formation de poussières néfastes à la qualité du remplissage et nuisibles à la qualité des opérations à conduire.

Par ailleurs les dispositifs décrits dans ces documents, ne permettent pas un réglage facile du débit de grains.

Enfin, ils ne permettent pas non plus la correction des écarts accidentels de hauteur de remplissage qui peuvent résulter d'irrégularités ponctuelles du flux de grains, par exemple à cause de corps étrangers ou de la coalescence en boules de certaines particules.

La présente invention vise à remédier à l'ensemble des inconvénients signalés grâce à un appareil,
- qui permet de distribuer selon une pluie homogène et régulière les particules sur toute la surface plane horizontale du lit, qui assure la protection des particules ou granulés à mettre en place dans la capacité, pour éviter leur attrition et réduire la production de poussière,
- qui permet de remédier à d'éventuelles anomalies apparues lors du remplissage, telles que déficience en particules dans une zone de la capacité, sans pour autant arrêter l'opération de remplissage,
- et qui, enfin, permet un réglage facile et progressif du débit de remplissage.

L'appareil de remplissage de la revendicaticn 1 permet de remédier à ces inconvénients.

Un appareil de remplissage pour matières solides divisées en grains ou particules, selon un mode de réalisation de l'invention comporte, dans un corps approximativement cylindrique, d'abord un ensemble sensiblement vertical de tubulures épanouies vers le bas en tulipes et disposées les unes à l'intérieur des autres, laissant entre elles et autant de tubulures droites et coulissantes, des espaces ou conduits déterminant le débit des grains ou particules.

A la sortie en bas de ce premier ensemble vertical, dont les grains s'écoulent par gravité, on trouve un ensemble de dispersion qui comporte :
- un dispositif pneumatique de propulsion délivrant, au bord inférieur des tulipes, des jets de gaz, sensiblement radiaux à géométrie et durée variables,
- et un dispositif mécanique centrifuge de répartition constitué de plateaux tournant autour de l'axe vertical de l'ensemble pour conduire les grains à des positions de chute régulièrement réparties dans le plan horizontal de coupe du récipient.
- enfin, un moyen de correction des inégalités accidentelles de répartition d'origine extérieure: corps étrangers ou agglomérations de grains, vient compléter le dispositif ; il prélève des grains en amont du dispositif pour les répartir sur une partie limitée de la périphérie.

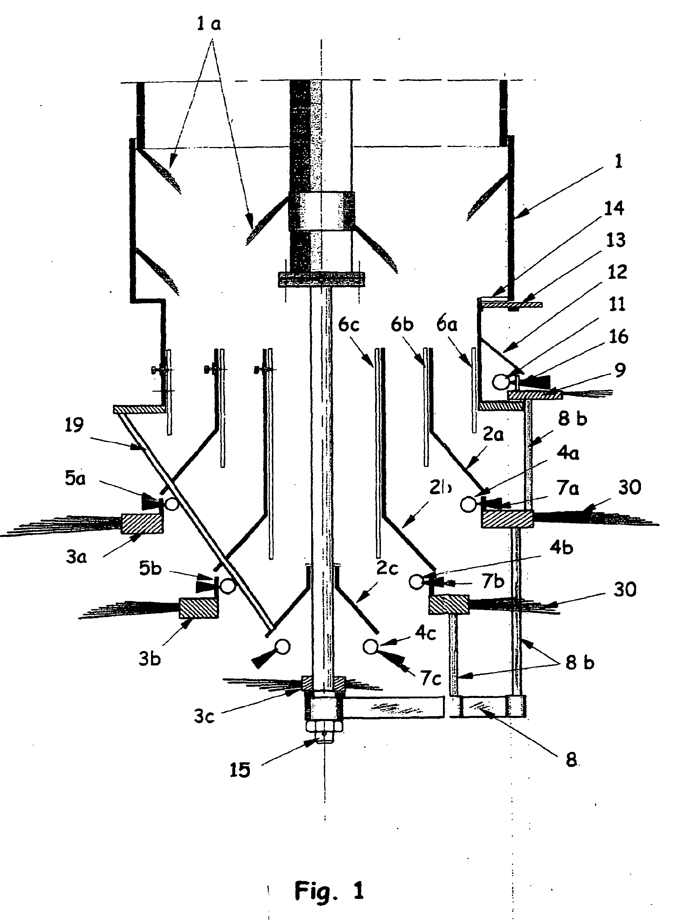

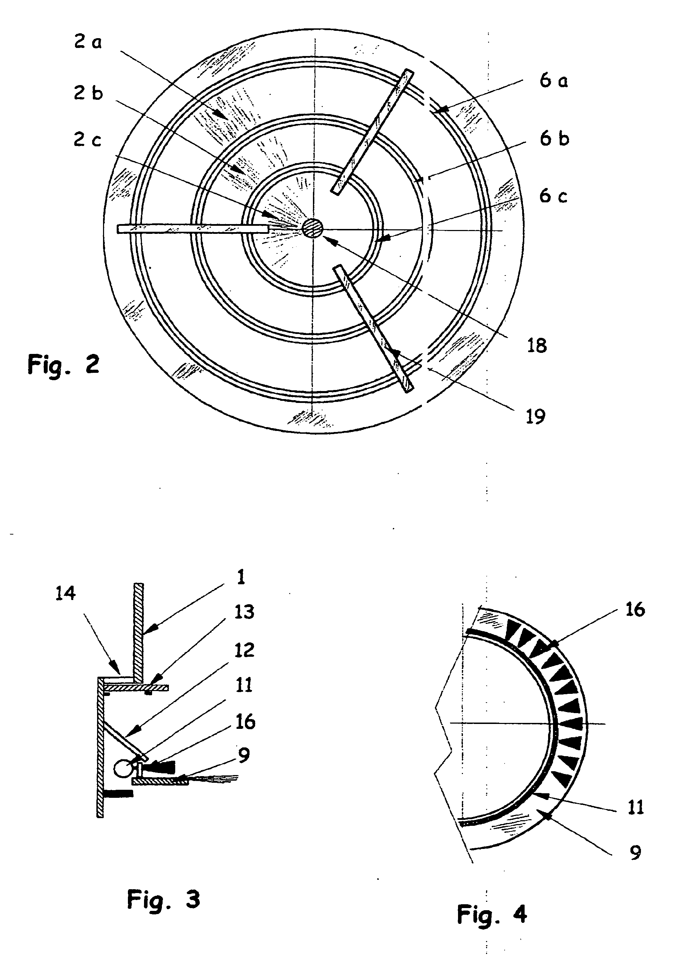

Un mode de réalisation de l'appareil d'alimentation selon l'invention est représenté en coupe axiale sur la figure 1. Des éléments de cet appareil sont représentés sur les figures 2 à 10.

Le corps (1) qui reçoit les grains en vrac à sa partie supérieure est pourvu de déflecteurs à brosses (1a). Il contient, à sa partie inférieure un jeu de tubulures épanouies en tulipes (2a), (2b) (2c), et les tubulures droites (6a), (6b), (6c) qui peuvent coulisser verticalement de façon indépendante, et dont les bords inférieurs délimitent avec les tulipes (2a), (2b), (2c) les sections de passage des grains.

Les tulipes sont reliées entre elles et au corps (1) par des tiges (19).

Les mêmes tiges (19) portent, au droit des bords des tulipes (2a), (2b), (2c), des tubes circulaires (4a), (4b), (4c) alimentés en gaz sous pression et perforés pour laisser passer des jets (7a), (7b), (7c) vers l'extérieur.

Les jets (7a), (7b), (7c) sont masqués ou dégagés par les bagues ajourées (5a), (5b) fixées à la partie interne des plateaux de répartition (3a), (3b), (3c).

Les tubes perforés et les couronnes ajourées forment l'ensemble de propulsion des grains.

Le dispositif mécanique centrifuge de répartition est constitué d'un axe (15), mu en rotation par moteur électrique, pneumatique ou hydraulique et entraînant des bras (8) terminés par les tiges (8b) qui portent les plateaux de répartition (3a), (3b), (3c), au niveau des bords inférieurs des tulipes (2a), (2b), (2c).

Chacun des plateaux de répartition (3a), (3b), (3c) est constitué d'un moyeu en forme de couronne sensiblement horizontale, portant une bague ajourée (5a), (5b), décrite plus haut et un ensemble de brosses (30) s'étendant de façon approximativement horizontale sur toute sa périphérie. Les poils des brosses (30) ont des longueur et orientation variables selon leur position à la périphérie du moyeu.

Le correcteur de répartition Fig. 3 et Fig. 4, est constitué de la façon suivante. Une ouverture (14) est pratiquée dans le corps (1), elle est obturée de façon réglable par un diaphragme (13) et selon la position de ce diaphragme (13) laisse passer un f lux réglable de grains. Ces grains glissent sur la pente (12) et sont propulsés par des jets de gaz (16) issus d'un élément de tube perforé (11), à travers une couronne ajourée tournante analogue à (5a), (5b). Ladite couronne ajourée est fixée sur un plateau de répartition (9) analogue à (3a), (3b), (3c) entraîné par les tiges (8b). Le correcteur de répartition permet d'obtenir un écoulement localisé de grains vers un secteur déterminé du lit dont la hauteur se révèlerait accidentellement trop faible.

L'appareil de remplissage selon l'invention fonctionne de la façon décrite ci-dessous.

Les particules s'écoulent par gravité vers le bas de l'appareil et sont réparties en écoulements séparés par les tubulures épanouies (2) et réglées en débit par la position en hauteur des tubulures droites (6), chaque tubulure droite délimitant avec la tubulure épanouie correspondante, une section de passage ajustable séparément.

Les particules glissent le long des tubes tulipes (2a), (2b), (2c) et sont orientées vers l'extérieur du récipient à remplir, par l'effet tremplin de l'embase des tubes tulipes, conduits de dimension supérieure à leur partie inférieure, pour être ensuite soufflées et projetées par des jets de gaz (7), avant d'être dispersées vers l'extérieur de la capacité par des plateaux de répartition (3) à poils lisses ou sous forme de brosses plus ou moins circulaires.

Dans la réalisation préférée de l'appareil d'alimentation selon l'invention, on utilise les éléments décrits ci-après, sans que cela ne puisse constituer une limitation du domaine de l'invention.

Les conduits tulipes, sont dans leur partie supérieure, soit cylindriques avec une partie basse évasée terminée en forme d'arc de cercle ou de forme conique, soit de section polygonale avec une partie évasée pentue de forme pyramidale droite; dans ce cas, le nombre de côtés de la partie polygonale sera égal et en correspondance avec le nombre de côtés de la pyramide.

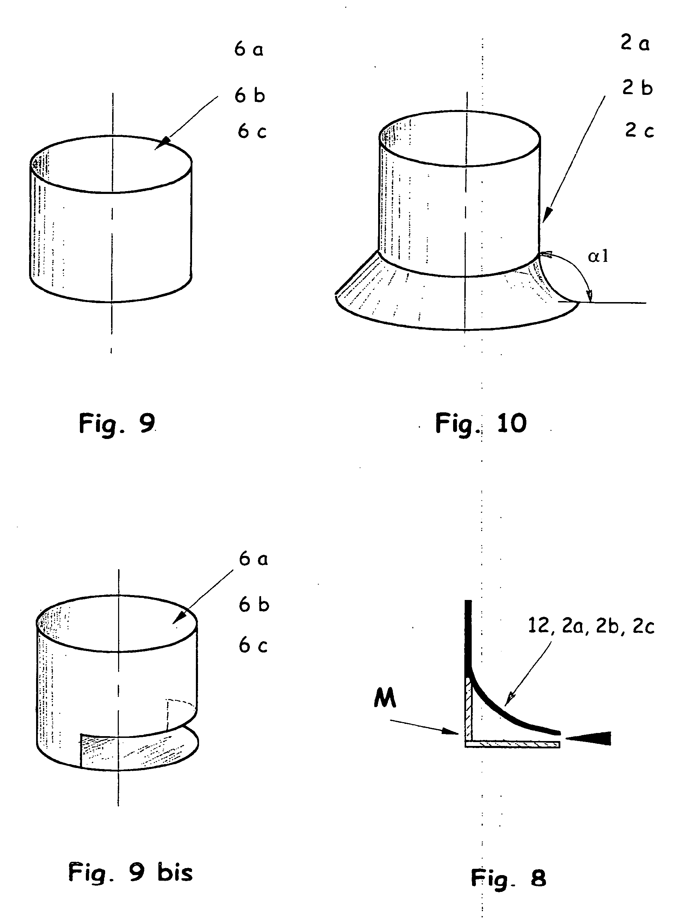

Le profil de forme circulaire fera un angle (α1) avec la verticale compris entre 15° et 120° dans une forme préférée entre 60° et 90° (fig.10). Le profil conique et les profils pyramidaux feront un angle compris entre 15° et 85° avec la verticale, dans une réalisation de pente préférée comprise entre 30° et 60°.

Un autre avantage de la forme polygonale, est de délivrer à des distances différentes par rapport au diamètre, les grains de matière sur les plateaux à brosse ; et de créer ainsi des variations de distance de projection dans l'enceinte, ceci établit une première répartition, en faisant varier la distance de projection des grains vers le lit.

Le polygone régulier sera de 4 à 16 côtés, avec une réalisation préférée entre 6 et 8 côtés.

L'ensemble de propulsion est réalisé au moyen de conduits circulaires (4a), (4b), (4c) situés au dessous du bord de l'épanouissement des tubulures en tulipes, au niveau des plateaux à brosses, ou sensiblement au dessus de leur partie supérieure, ils portent des orifices ou des buses disposées à l'extérieur de ceux-ci, de direction plus ou moins horizontale avec une variation vers le haut de 0° à 30° maximum et vers le bas de 0° à 20° maximum ; avec des réalisations préférées entre 0° à 15° vers le haut et de 0° à 10° vers le bas.

Les jets de gaz du dispositif de propulsion peuvent aussi provenir d'une capacité formée, autour de la partie inférieure de chaque tubulure épanouie entre ladite partie inférieure et une couronne (M) Fig. 8 de profil radial approprié.

Les ouvertures ou buses d'où sortent les jets de gaz du dispositif de propulsion peuvent être réunies en une seule ouverture continue, les jets de gaz étant alors transformés en un flux laminaire continu le long du bord inférieur des tulipes.

La puissance du souffle pourra être établie pour avoir des flux identiques permanents. Dans le principe de l'aéro dispersion à souffle fixe, l'avantage est de souffler de manière uniforme les particules vers les brosses. La puissance du souffle peut être ajustée en faisant varier la pression du gaz dans le conduit circulaire. Mais il est intéressant de disposer de diverses forces de poussées, afin d'obtenir des distances de projection des particules différentes. Par exemple trois orifices de diamètres 1.5mm, 2mm, et 3mm pratiqués sur la couronne, permettent sous une pression de 2 bars, de projeter des particules de taille comprise entre 2mm et 4 mm et de densité voisine de 0.7, à des distances respectives de 1.2m, 1.8m et 2.5m.

Un procédé amélioré consiste à arrêter le souffle sur tout ou partie de ses zones d'émission, ou d'en faire varier son intensité.

Dans ce principe amélioré, l'effet du souffle de gaz arrivant sur le plateau de manière plus ou moins horizontale, peut être modulé au niveau de son intensité ; et de façon partielle ou totale, selon l'effet recherché. Il est en effet très intéressant de pouvoir disposer d'une modulation permanente des effets de projection radiale des particules dans la capacité.

Le principe de base d'une bonne distribution granulométrique dans la capacité est le bon arrosage de tous les secteurs de la section de la capacité ou sont projetées les particules. Avec les procédés classiques de projection des particules basés sur la force centrifuge, ou les projections par gaz, il est recommandé d'effectuer fréquemment des « balayages » soit en faisant varier la vitesse de rotation des éléments mobiles de projection ; soit en procédant à des variations de pression du gaz de projection.

Afin obtenir cet effet, les plateaux à brosse du dispositif de répartition sont pourvus d'une barrière verticale sur leur partie interne, cette barrière est en forme de « bague » plus ou moins circulaire, et positionnée sensiblement à partir du niveau supérieur du plateau à brosse, remontant jusqu'au dessus des orifices ou buses créant le souffle afin de faire un obstacle partiel et variable au passage du flux de gaz.

L'effet variable est obtenu en modulant le passage du souffle au travers de la bague. Pour réaliser cet effet la bague est pourvue de trous plus ou moins grands et plus ou moins rapprochés, une partie de la bague peut être composée d'une grille, ou grillage comportant une porosité allant de 1% à 99 %. On a remarqué qu'une porosité établie entre 10 et 90 % donnait d'excellents résultats pour faire varier et moduler la puissance du jet de gaz.

La distance de la bague (5) aux sorties de gaz, sera comprise entre 0.1mm et 20mm, et la hauteur de la bague (5) faisant obstacle aux jets (7) sera comprise entre 0.5 fois et 5 fois du diamètre de l'orifice générant le jet de gaz, ou de la hauteur de l'ouverture du dispositif de propulsion formé par la couronne (M) et la partie inférieure de la tubulure épanouie. Toutefois la dimension préférée sera comprise entre 1 et 3 fois.

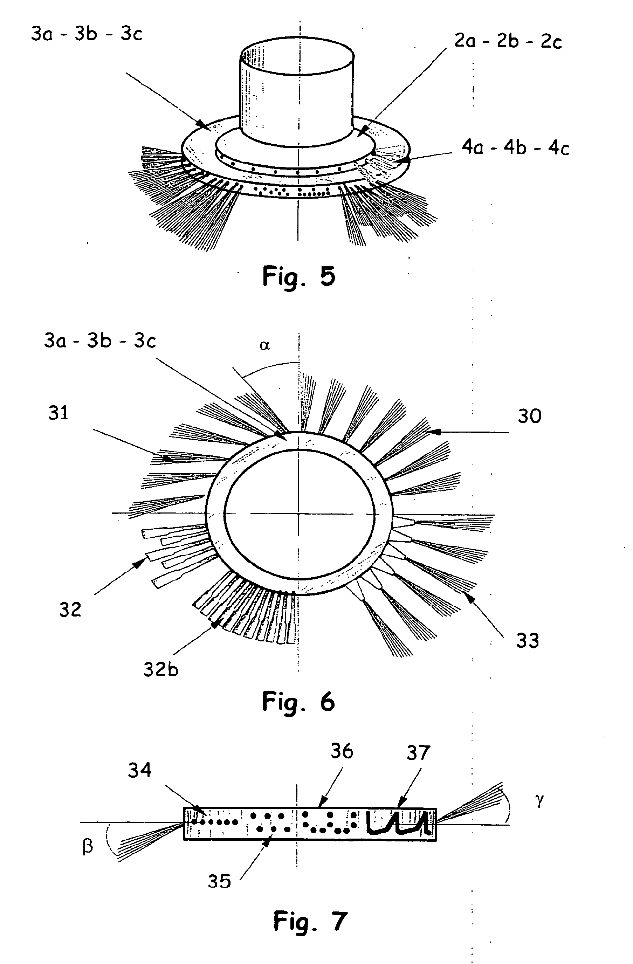

Les plateaux de répartition à brosses du dispositif de répartition fig. 6 sont de forme galette, ou couronne plus ou moins cylindriques avec, implantés à leur périphérie, des poils semi rigides, souples et lisses, des touffes de poils, ou des systèmes ramifiés pourvus de poils.

La dimension intérieure du plateau est comprise entre 1/2 fois et 2 fois la dimension la plus grande de la partie évasée du conduit tulipe ; et sa dimension extérieure est comprise entre 1 fois et 10 fois la dimension la plus grande de la partie évasée du conduit tulipe.

Ces plateaux à brosses sont lisses à leur partie supérieure pour recevoir le solide divisé et en faciliter la répartition. Cette face supérieure est plane et/ou creusée, de pente descendante ou ascendante du centre du plateau vers l'extérieur entre 0° et 20° ; dans sa réalisation préférée, l'inclinaison sera comprise entre 0° (plan horizontal) et 10°.

Les plateaux seront au nombre de 1 à 20 et de préférence entre 2 et 5.

Le plan supérieur moyen qui reçoit les grains, est horizontal ou incliné avec un angle maximum de 10° par rapport à l'horizontale; dans sa réalisation préférée, l'inclinaison sera comprise entre 0° et 2° et variable le long du pourtour du plateau, ceci provoque un effet de « balayage » qui améliore la répartition des grains.

Les brosses (30), (31) fig. 6 sont composées de poils souples et flexibles semi rigides de section et de formes diverses : soit à profil arrondi: cylindriques ou ovales ou encore de forme géométriques variées sensiblement : rectangulaires, carrées, trapézoïdales, triangulaires ou de formes quelconques. Ces brosses sont fabriquées avec des poils de fibre naturelle comme le Tampico , des fibres métalliques ou des fibres synthétiques plus nerveuses en Rilsan, Nylon, polyester par exemple de 75/100 mm à 2 mm de diamètre et plus de 200mm de longueur. Les poils peuvent être tubulaires thermo rétractables, de diamètre 2mm à 20 mm et peuvent s'adapter à des formes et des arrangements particuliers (32), (32b) fig.6.

Les poils sont de forme plus ou moins rectilignes ou courbes avec éventuellement un mouvement spiralé sur leur longueur, de préférence rectiligne ou légèrement courbés.

Le diamètre moyen des poils, sera compris entre 1/10 mm et 6 mm. Il sera caractérisé par une distance égale à deux fois la longueur moyenne comprise entre le centre de gravité et l'ensemble des points définissant le contour de la section de ces poils.

Dans sa dimension préférée, pour la présente invention, le diamètre moyen sera compris entre 0.1 mm et 1,5 mm.

Ces poils auront pour caractéristique d'être souples et lisses afin de protéger les grains lors de leur contact avec ceux-ci. Pour disperser les grains ou le solide divisé, les poils subiront une déformation induite par la prise en charge de ceux ci. Ils devront aussi pouvoir restituer cette énergie absorbée, traduite par une certaine déformation élastique. Les poils sont caractérisés par ce qu'ils sont à mémoire de forme.

La longueur de ces poils sera comprise entre 1 mm et 3000 mm.

Pour un appareil de remplissage donné, il sera défini différentes longueurs de poils en fonction du nombre d'étages de dispersion, celle-ci pourra varier, afin de distribuer les particules équitablement sur toute la surface du lit à charger.

La longueur des poils situés sur un plateau de répartition, sera établie en fonction du rayon du récipient à remplir, et sera comprise entre 1 % et 50 % du rayon de celui-ci avec comme valeur préférée entre 5% et 20% de ce rayon.

La position des poils sur le plateau de répartition se fera selon différentes configurations sur l'épaisseur du plateau. A un même niveau sensiblement horizontal, (34) Fig.7 ou avec des niveaux alternant poils en partie basse du plateau et en partie haute, ou en implantation hélicoïdale, ou en quinconce, (35) selon un tracé sensiblement sinusoïdal, ou encore en forme de « U » (36) dans la forme préférée de l'invention fig. 7. Les poils pourront être implantés en position angulaire radiante (30) fig. 6 par rapport au centre du plateau, ou avec un angle de 0° à 45° avec une position préférée entre 0° et 15° (31). Les poils pourront aussi être implantés avec des angles compris entre 0° et 30°, par rapport au plan horizontal, vers le haut ou vers le bas, avec une position préférée entre 0° et 15°.

Les poils seront disposés en nappe continue ou pas (37) fig. 7, sur la périphérie du plateau, ou bien en touffes, ou encore sur des supports implantés sur la brosse : par exemple il seront implantés à l'extrémité aplatie de bâtonnets creux leur procurant une forme d'éventail (33).

Les plateaux pourront être équipés de bandelettes lisses et articulées, venant se substituer aux poils; les plateaux à bandes minces et lisses répartiteurs seront de forme galette, ou couronne plus ou moins cylindrique, ou ovale, avec une épaisseur permettant d' y accrocher des bandes plates lisses et semi rigides, à leur périphérie. La longueur de ces bandelettes, sera comprise entre 0.1 fois et 10 fois le diamètre des plateaux. Les plateaux seront lisses à leur partie centrale afin de recevoir et de permettre la répartition du solide divisé sur son plan supérieur.

Le système correcteur de répartition est une adaptation du procédé de distribution de particules décrit précédemment par la combinaison de l'aéro dispersion variable appliquée à des ouvertures pratiquées sur une partie de la périphérie du corps de l'appareil.

Ces ouvertures sont effectuées sur la partie basse du corps entre le bas et la moitié de celui-ci, et sur une partie de la circonférence formant un secteur compris entre 5° et 300°, avec une réalisation préférée entre 60° et 180°.

La dimension de ces ouvertures sera comprise entre 0.01 fois et 0.5 fois le diamètre du corps de l'appareil, et de préférence entre 0.05 fois et 0.2 fois ce diamètre.

La dimension de l'ouverture pourra également être ajustée en fonction de la taille des particules à disperser.

Ce système consiste en un ensemble de buses de gaz comprimé (16) ou de jets réalisés à partir d'orifices effectués à la périphérie d'une couronne ou secteur de couronne dirigeant les particules vers la zone déficiente ; et/ou d'un plateau de dispersion à brosse.

L'orientation verticale des jets de gaz (7), du dispositif de propulsion varie en fonction de leur position le long du circuit de gaz qui les alimente.

Les jets de gaz (7), du dispositif de propulsion sont alimentés par des chambres annulaires formées autour et à l'intérieur des évasements en tulipe du dispositif d'alimentation (M).

## Revendications

1. Appareil destiné au remplissage de récipients tels que réacteurs, silos ou analogues avec des particules solides, comportant à l'intérieur d'un corps vertical (1), à la fois un dispositif d'alimentation sous forme d'un jeu de tubulures verticales disposées de façon coaxiales les unes à l'intérieur des autres et un dispositif de répartition constitué par un ensemble de plateaux mobiles en rotation (3), tournant autour de l'axe de l'appareil et, **caractérisé en** le que les tubulures sont épanouies vers le bas en tulipes (2), les plateaux mobiles on rotation (3) étant situés chacun sous l'épanouissement de chaque tulipe, et an ce que l'appareil comporte un dispositif de propulsion (4), constitué par des jets de gaz (7) placés au droit des bords épanouis tulipes (2) et dirigés vers l'extérieur.

2. Appareil selon la revendication 1 **caractérisé en ce qu'**il comporte en plus des tubulures droites (6), dont les positions sont séparément réglables en hauteur par coulissement autour des tubulures épanouies.

3. Appareil selon la revendication 1 **caractérisé en ce que** les plateaux du dispositif de répartition sont constitués chacun par un anneau plein muni à sa périphérie de brosses (30), ou d'éléments périphériques filiformes.

4. Appareil selon la revendication 3 **caractérisé en ce que** les brosses (30) ou les éléments périphériques filiformes, ont des dimensions radiales qui varient en fonction de leur position sur la périphérie.

5. Appareil selon la revendication 1 et 3 **caractérisé en ce que** la puissance du souffle du dispositif de propulsion peut être ajustée en faisant varier la pression du gaz.

6. Appareil selon la revendication 1 **caractérisé en ce que** les jets de gaz du dispositif de propulsion peuvent être obturés partiellement et modulés par des bagues ajourées (5), fixées aux plateaux tournants (3), du dispositif de répartition.

7. Appareil selon la revendication 1 **caractérisé en ce que** l'orientation verticale des jets de gaz (7), du dispositif de propulsion varie en fonction de leur position le long du circuit de gaz qui les alimente.

8. Appareil selon la revendication 1 **caractérisé en ce que** les jets de gaz (7), du dispositif de propulsion sont alimentés par des chambres annulaires formées autour et à l'intérieur des évasements en tulipe du dispositif d'alimentation (M).

9. Appareil selon la revendication 1 **caractérisé en ce que** les jets de gaz de propulsion (7), sont réunis pour former un jet laminaire issu d'une ouverture continue le long du circuit de gaz.

10. Appareil selon la revendication 1 **caractérisé en ce qu'**il comporte un correcteur (9, 16, 11, 12, 13 et 14), constitué par un ensemble annexe d'alimentation, propulsion, répartition situé en amont de l'appareil principal et n'intéressant qu'un secteur limité de la périphérie.

## Claims

1. Apparatus for loading vessels such as reactors, silos and similar ones with solid particles, comprising within a vertical body (1), both a supplying device made up of a set of vertical tubes, co-axially arranged one within the other and a distribution device made up of an assembly of rotating plates (3), rotating around the axis of the apparatus, **characterized in that** the tubes are bell shaped enlarged towards the bottom (2), the rotating plates (3) are situated each under the bell shaped opening tubes, and **in that** the apparatus comprises a propulsion device (4), made up of gas jets (7) located at same level and in front of the bell shaped openings tubes (2) and facing the outside.

2. Apparatus according to claim 1, in which there are in addition straight pipes (6) whose positions are independently adjustable in height, by sliding around the bell shaped tubes.

3. Apparatus according to claim 1, in which the distribution plates are each constituted of a plain ring fitted with brushes (30) on its periphery or with filiform peripherical elements.

4. Apparatus according to claim 3 in which the brushes (30) or filiform peripherical elements have varying radial dimensions in accordance with their position on the periphery.

5. Apparatus according to claim 1 and 3 in which the power of the blowing of the propulsion device can be adjusted by regulating the gas pressure.

6. Apparatus according to claim 1 in which the gas jets of the propulsion device can be partially sealed and modulated by perforated rings (5) that are fixed to the rotating plates (3) of the distribution device.

7. Apparatus according to claim 1 is in which the vertical direction of the gas jets (7) of the propulsion device vary in accordance with their position along the gas circuit from which they get their gas feed.

8. Apparatus according to claim 1 in which the gas jets (7) of the propulsion device get their gas feed from ring like chambers formed around and within the bell shaped openings of the feeding device (M).

9. Apparatus according to claim 1 in which the propulsion of the gas jets (7) are brought together to form a laminar jet generated by a continuous opening along the gas circuit.

10. Apparatus according to claim 1 including a corrector (9, 16, 11, 12, 13 and 14) that consists of an annexed feeding, propulsion, and distribution assembly situated before the main apparatus and concerning only a limited area of the periphery.

## Patentansprüche

1. Vorrichtung zum Füllen von Behältern, wie zum Beispiel Reaktoren, Silos oder dergleichen, mit festen Teilchen, umfassend, im Innern eines vertikalen Körpers (1), sowohl eine Versorgungseinrichtung in Form eines Satzes vertikaler Röhren, die koaxial angeordnet sind, und zwar die einen innerhalb der anderen, als auch eine Verteilungseinrichtung, die aus einer Gesamtheit rotationsbeweglicher Platten (3) besteht, die sich um die Achse der Vorrichtung drehen,
**dadurch gekennzeichnet, dass** sich die Röhren nach unten hin zu tulpenförmigen Teilen (2) auseinanderbreiten, wobei die rotationsbeweglichen Platten (3) jeweils unter der Ausweitung jedes tulpenförmigen Teils liegen, und dass die Vorrichtung eine Antriebseinrichtung (4) aufweist, die aus Gasstrahlen (7) besteht, die im rechten Winkel zu den auseinandergebreiteten Rändern der tulpenförmigen Teile (2) platziert und nach außen gerichtet sind.

2. Vorrichtung nach Anspruch 1, **dadurch gekennzeichnet, dass** sie weiterhin gerade Röhren (6) aufweist, deren Positionen separat höhenverstellbar sind durch Gleiten um die auseinandergebreiteten Röhren.

3. Vorrichtung nach Anspruch 1, **dadurch gekennzeichnet, dass** die Platten der Verteilungseinrichtung jeweils aus einem vollen Ring bestehen, der an seiner Peripherie mit Bürsten (30) versehen ist, oder mit fadenförmigen peripheren Elementen.

4. Vorrichtung nach Anspruch 3, **dadurch gekennzeichnet, dass** die Bürsten (30) oder die fadenförmigen peripheren Elemente radiale Dimensionen aufweisen, die in Abhängigkeit von ihrer Position auf der Peripherie variieren.

5. Vorrichtung nach Anspruch 1 und 3, **dadurch gekennzeichnet, dass** die Stärke des Blasens der Antriebseinrichtung eingestellt werden kann, indem ein Variieren des Drucks des Gases bewirkt wird.

6. Vorrichtung nach Anspruch 1, **dadurch gekennzeichnet, dass** die Gasstrahlen der Antriebseinrichtung teilweise gesperrt und moduliert werden können von durchbrochenen Ringen (5) der Verteilungseinrichtung, die an den Drehplatten (3) befestigt sind.

7. Vorrichtung nach Anspruch 1, **dadurch gekennzeichnet, dass** die vertikale Ausrichtung der Gasstrahlen (7) der Antriebseinrichtung in Abhängigkeit von ihrer Position entlang dem Gaskreislauf variiert, der sie speist.

8. Vorrichtung nach Anspruch 1, **dadurch gekennzeichnet, dass** die Gasstrahlen (7) der Antriebseinrichtung von ringförmigen Kammern gespeist werden, die um die Aufweitungen in Tulpenform der Versorgungseinrichtung (M) herum und in deren Innerem geformt sind.

9. Vorrichtung nach Anspruch 1, **dadurch gekennzeichnet, dass** die Antriebsgasstrahlen (7) vereinigt sind, um einen laminaren Strahl zu bilden, der aus einer kontinuierlichen Öffnung entlang dem Gaskreislauf hervorgegangen ist.

10. Vorrichtung nach Anspruch 1, **dadurch gekennzeichnet, dass** sie eine Korrektureinrichtung (9, 16, 11, 12, 13 und 14) aufweist, die aus einer Versorgungs-, Antriebs- und Verteilungs-Nebenanordnung besteht, die stromauf von der Hauptvorrichtung liegt und lediglich einen begrenzten Abschnitt der Peripherie betrifft.
